# EUROPÄISCHE PATENTANMELDUNG

(11) **EP 3 075 754 A1**
(43) Veröffentlichungstag der Anmeldung: **05.10.2016**
(21) Anmeldenummer: 15162259.4
(22) Anmeldetag: 01.04.2015
(51) Int. Cl.: C08G 12/32, C08J 3/14

(54) **PORÖSE PARTIKEL ENTHALTEND AMINOPLAST**

(71) Anmelder: BASF SE, 67056 Ludwigshafen am Rhein (DE)
(72) Erfinder: SCHADE, Matthias, 67117 Limburgerhof (DE); VON BENTEN, Rebekka, 67063 Ludwigshafen (DE); REUTER, Frank, 55278 Undenheim (DE)
(74) Vertreter: Féaux de Lacroix, Stefan

(57) **Zusammenfassung**

Die Erfindung betrifft ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, einen Aminoplast-Partikel, eine Kunststoffschicht enthaltend Aminoplast-Partikel sowie die Verwendung der Aminoplast-Partikel.

## Beschreibung

Die Erfindung betrifft ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, einen Aminoplast-Partikel, eine Kunststoffschicht enthaltend Aminoplast-Partikel sowie die Verwendung der Aminoplast-Partikel.

DE-A-1495379 beschreibt ein Verfahren zur Herstellung feinteiliger, unlöslicher und unschmelzbarer Aminoplast-Partikel mit einer inneren Oberfläche > 10 m²/g, wenn man aus einer wässrigen Lösung von Melamin und Formaldehyd im Molverhältnis zwischen 1,5 und 6 bei Temperaturen zwischen 0 °C und 140 °C und pH-Werten zwischen 6 und 0 eine feste Phase bildet, diese von anorganischen Teilchen wenigstens größtenteils befreit, bei Temperaturen zwischen 30 und 160 °C entwässert und auf eine mittlere Teilchengröße von kleiner als 5 µm zerkleinert.

Die Aminoplast-Partikel aus dem Stand der Technik haben den Nachteil, dass meistens nur kleine Partikelgrößen von maximal 5 µm erreicht werden und dies erst nach einem mechanischen Mahlschritt. Dies hat den Nachteil, dass die Partikel für viele Anwendungen aufgrund ihrer Form und Partikelgröße ungeeignet sind.

Es besteht daher ein Bedarf an Partikeln, die aufgrund ihrer Partikelgröße, Form und damit einhergehender Oberfläche für viele Anwendungen geeignet sind.

Die Aufgabe der vorliegenden Erfindung liegt somit darin, Aminoplast-Partikel bereitzustellen, die die Nachteile des Standes der Technik überwinden.

Die Aufgabe wurde gelöst durch ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, umfassend die Schritte:
a) Bereitstellen eines Lösungsmittels und gegebenenfalls Zugabe einer Säure (B),
b) Erwärmen des Lösungsmittel auf eine Temperatur von 20 °C bis 200 °C,
c) Zugabe von einem Harz (A) und der Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min,
g) gegebenenfalls Zugabe von mindestens einem Zusatzstoff (D).

Unter der spezifischen Oberfläche kann im Sinne der vorliegenden Erfindung eine Oberfläche verstanden werden, die die Summe aller zugänglichen Oberflächen dividiert durch die Probenmasse ist.

Die spezifische Oberfläche kann man mittels Gasadsorption nach Brunauer Emmett und Teller bestimmen. Die Methode wird zum Beispiel in der DIN ISO 9277 (Januar 2014) beschrieben.

Unter einem mittleren Partikeldurchmesser kann man im Sinne der vorliegenden Erfindung den mittels Laserstreuung (Malvern Mastersizer 2000) ermittelten d(0,5) Wertes (Dᵥ₅₀) verstehen. Dieser Wert beschreibt, dass 50 % der Partikel (bezogen auf das gesamte Volumen aller Partikel) kleiner sind als dieser Durchmesser (siehe hierzu HORIBA Scientific, A Guidebook to Particle Size Analysis, Seite 5).

Aminoplast-Partikel können beispielsweise durch Kondensation von Formaldehyd mit Verbindungen, die zwei oder mehr Aminogruppen enthalten, wie Harnstoff/Thioharnstoff, Melamin, Cyanamid, Diaminohexan, erhältliche teilchenförmige Feststoffe sein.

Als Lösungsmittel in Schritt a) eignen sich beispielsweise Wasser, Alkohole, wie Methanol, Ethanol, Propanol, Butanol, Glykole, wie z.B. Monoethylenglykol, Diethylenglykol, Triethylengly-kol, Polyethylenglykol.

Als Aminoplaste für die Partikel eignen sich beispielsweise Harnstoff-Formaldehyd-Kondensate, Melamin-Formaldehyd-Kondensate oder deren Mischungen, Melamin-Harnstoff-Formaldehyd-Kondensate, Melamin-Harnstoff-Phenol-Formaldehyd-Kondensate oder deren Mischungen.

Diese Kondensate können mit Alkoholen, bevorzugt C₁ bis C₄-Alkohole, insbesondere Methanol oder Butanol, teilweise oder vollständig verethert sein. Bevorzugt sind veretherte und/oder nicht veretherte Melamin-Formaldehyd-Kondensate, besonders bevorzugt nicht veretherte Melamin-Formaldehyd-Kondensate. Ebenfalls kann das Aminoplast als Copolymer oder als Polymer-blend vorliegen. Beispielsweise kann ein Aminoplast mit einem Acrylharz verwendet werden.

Als Harz können im Sinne der vorliegenden Erfindung Polykondensationsprodukte aus Verbindungen mit mindestens einer, gegebenenfalls teilweise mit organischen Resten substituierten, Carbamidgruppe (die Carbamidgruppe wird auch Carboxamidgruppe genannt) und einem Alde-hyd, vorzugsweise Formaldehyd, Ethanal, Propanal, Glutardialdehyd, verstanden werden.

Insbesondere kann unter einem Harz im Sinne der vorliegenden Erfindung ein Aminoplastharz verstanden werden. Als Aminoplastharz werden hier Polykondensationsprodukte aus Verbindungen mit mindestens einer, gegebenenfalls teilweise mit organischen Resten substituierten, Carbamidgruppe (die Carbamidgruppe wird auch Carboxamidgruppe genannt) und einem Aldehyd, vorzugsweise Formaldehyd, Ethanal, Propanal, Glutardialdehyd, verstanden. Vorzugsweise ist das Harz ein Aminoplast-Vorkondensat. Das Harz oder Aminoplast-Vorkondensat kann auch als Aminoplastharz oder Phenolformaldehydharz bezeichnet werden.

Unter einem Aminoplast-Vorkondensat können im Sinne der vorliegenden Erfindung dem Fachmann bekannte Harnstoff-Formaldehyd-, Melamin-Formaldehyd-, Melamin-Harnstoff-Formaldehyd- oder Melamin-Harnstoff-Phenol-Formaldehyd-Kondensate verstanden werden, die zu Oligomeren vorkondensiert wurden und vorzugsweise lagerfähig stabilisiert wurden. Diese sind dem Fachmann auch als Harze bekannt, wie beispielsweise Aminoplastharze oder Phenolformaldehydharze. Dazu können beispielsweise die Aminoplast-Vorkondensate unter basischen Bedingungen vorkondensiert werden, um dann im neutralen pH-Wert Bereich lagerstabil gemacht zu werden. Diese Aminoplast -Vorkondensate können beispielsweise teilweise mit C₁-C₄-Alkoholen verethert sein. Vorteilhafterweise sind die Aminoplast-Vorkondensate bei Raumtemperatur flüssig.

Als gut geeignetes Aminoplastharz können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmanns Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben.

Bevorzugte Aminoplastharze sind Polykondensationsprodukte aus Verbindungen mit mindestens einer, auch teilweise mit organischen Resten substituierten, Carbamidgruppe und Formaldehyd.

Besonders bevorzugte Aminoplastharze sind Harnstoff-Formaldehydharze (UF-Harze), Melamin-Formaldehydharze (MF-Harze) oder melaminhaltige, Harnstoff-Formaldehydharze (MUF-Harze) oder Mischungen daraus.

Weiterhin ganz bevorzugte Aminoplastharze sind Polykondensationsprodukte aus Verbindungen mit mindestens einer, auch teilweise mit organischen Resten substituierten, Aminogruppe und Aldehyd, worin das molare Verhältnis Aldehyd : gegebenenfalls teilweise mit organischen Resten substituierten Amino-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weiterhin ganz besonders bevorzugte Aminoplastharze sind Polykondensationsprodukte aus Verbindungen mit mindestens einer Aminogruppe -NH₂ und Formaldehyd, worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40, liegt.

Besonders bevorzugt werden 1 bis 60 Gew.-% eines Harzes (A), 0,1 bis 10 Gew.-% einer Säure (B), 0 bis 30 Gew.-% eines Zusatzstoffes und als Rest Lösungsmittel verwendet, wobei die die Summe der Komponenten (A), (B) ,eines Lösungsmittels und gegebenenfalls des mindestens einen Zusatzstoffes (D), 100 Gew.-% ergibt.

Vorzugsweise bezieht sich die Angabe der Gew.-% der Komponenten (A), (B) und gegebenenfalls des Zusatzstoffes auf das Trockengewicht der jeweiligen Komponenten (A), (B) und gegebenenfalls des Zusatzstoffes am Gesamttrockengewicht. Dies kann man beispielsweise über die Molmasse theoretisch berechnen. Besonders bevorzugt überschreitet die Summe der Gew.-%-Angaben der Komponenten (A), (B) und gegebenenfalls des Zusatzstoffes nicht 100 Gew.-%.

Bevorzugt ist das Aminoplast der Aminoplast-Partikel ausgewählt ist aus der Gruppe bestehend aus Harnstoff-Formaldehydharzen (UF-Harze), Melamin-Formaldehydharzen (MF-Harze), melaminhaltigen, Harnstoff-Formaldehydharzen (MUF-Harze) oder Mischung daraus.

Bevorzugt ist das Harz (A), welches vorzugsweise ein Polykondensationsprodukt ist, aufgebaut aus
i) 10 - 45 Gew.-% Formaldehyd,
ii) 40 - 90 Gew.-% Melamin,
iii) 0 - 50 Gew.-% mindestens eines Additives,
wobei die Summe der Komponenten unter i) bis iii) insgesamt 100 Gew.-% ergibt.

Besonders bevorzugt ist das Harz (A), welches vorzugsweise ein Polykondensationsprodukt ist, aufgebaut aus
i) 10 - 40 Gew.-% Formaldehyd,
ii) 45 - 85 Gew.-% Melamin,
iii) 0 - 45 Gew.-% mindestens eines Additives,
wobei die Summe der Komponenten unter i) bis iii) insgesamt 100 Gew.-% ergibt.

Ganz besonders bevorzugt ist das Harz (A), welches vorzugsweise ein Polykondensationsprodukt ist, aufgebaut aus
i) 25 - 30 Gew.-% Formaldehyd,
ii) 55 - 75 Gew.-% Melamin,
iii) 1 - 20 Gew.-% mindestens eines Additives,
wobei die Summe der Komponenten unter i) bis iii) insgesamt 100 Gew.-% ergibt.

Vorzugsweise werden als Additive verwendet:
- Alkohole, wie Methanol, Ethanol, Propanol, Butanol,
- Glykole, wie z.B. Monethylenglykol, Diethylenglykol, Triethyleglykol, Polyethylenglykol, wieder Polyole, wie z.B. 1,2-Propandiol, 1,3-Propandiol, 1,2-Butandiol, 1,3-Butandiol, 1,4-Butandiol, 2,3-Butandiol, diese können auch teilweise mit Alkanen oder Aromaten verethert sein
- allgemein Polymere des Ethylenoxid, Propylenoxids und deren Mischungen,
- Säuren und Säureamide, wie organische Säuren, Sulfonsäure, Sulfonamide, insbesondere Ameisensäure, Essigsäure, Propionsäure, Buttersäure, Methylsulfonsäure, Phenylsulfonsäure, Trifluormethansulfonsäure, Toluolsulfonsäure und deren Amide davon,
- Basen, wie z.B. Ethanolamin, Diethanolamin, Triethanolamin, Ethylethanolamin, Diethylethanolamin, Triethylamin,
- Verbindungen mit mindestens einer, auch teilweise mit organischen Resten substituierten Carbamidgruppe, wie z.B. Harnstoff, Monomethylharnstoff, Dimethylharnstoff, Benzoguanamin,
- Lactone oder Lactame, wie C₁-C₇ Lactone oder Lactame.

Ganz besonders bevorzugt wird als Additiv Methanol, Butanol, Monoethylenglycol, Diethylenglycol, Polyethylenglycol, 1,4-Butandiol, Ethylenoxid, Propylenoxid, eine Mischung von Ethylenoxid und Propylenoxid, Ameisensäure, Sulfonamide, Ethanolamin, Ethylethanolamin, Diethylethanolamin, Harnstoff, Benzoguanamin, ε-Caprolactam oder Mischungen daraus.

Bevorzugt wird das Harz als Lösung mit einer Konzentration von 1 bis 99 Gew.-%, bevorzugt 5 - 95 Gew.-%, besonders bevorzugt 15 - 85 Gew.-%, ganz besonders bevorzugt 30 bis 70 Gew.-% eingesetzt. Als Lösungsmittel kann dabei Wasser, Alkohole, wie z.B. Methanol, Ethanol, Propanol, Butanol, iso-Butanol, Glykole, wie z.B. Monoethylenglykol, Diethylenglykol, Triethylenglykol, oder deren Gemische dienen.

Unter einer Säure (B) kann im Sinne der vorliegenden Erfindung beispielsweise eine organische Carbonsäure oder anorganische Säure verstanden werden. Vorzugsweise ist die Säure (B) Ameisensäure, Essigsäure oder Propionsäure. Ebenfalls bevorzugt ist die Säure (B) eine anorganische Säure, beispielsweise eine Mineralsäure. Vorzugsweise ist die Säure (B) Schwefelsäure, Methansulfonsäure, Trifluormethansulfonsäure, Salzsäure, Salpetersäure oder Phosphorsäure. Dabei kann die Säure in einem Lösemittel wie Wasser, wässrigen Salzlösungen, organischen Lösemitteln oder Mischungen daraus gelöst sein. Besonders bevorzugt wird Salpetersäure verwendet.

Bevorzugt enthalten die Aminoplast-Partikel 70 bis 100 Gew.-% Aminoplast und 0 - 30 Gew.-% mindestens eines Zusatzstoffes, wobei die Gesamtmenge aus Aminoplast und Zusatzstoff 100 Gew.-% ergibt.

Als Zusatzstoff (D) kann beispielsweise ein Haftmittel verwendet werden, mit denen die Aminoplast-Partikel in oder an eine Matrix ein- oder angebunden werden können. Des Weiteren können Füllstoffe verwendet werden, wie beispielsweise Siliziumdioxid, gefällte Kieselsäure, Silikagel oder pyrogene Kieselsäure, Glimmer, Montmorillonit, Kaolinit, Asbest, Talk, Kieselgur, Vermiculit, natürliche und synthetische Zeolithe, Zement, Calciumsilikat, Aluminiumsilikat, Natrium-Aluminium-Silikat, Aluminium-Polysilikat, Aluminium-Silicagele, Gips und Glaspartikel oder feinteilige, teilchenförmige, im Wesentlichen wasserunlösliche Füllstoffe wie Ruß, Holzkohle, Graphit oder Titandioxid.

Weiterhin können als Zusatzstoff (D) übliche Weichmacher wie, Fette, Öle, Paraffinöle, Weißöle, Phthalate verwendet werden. Damit kann mein ein Stauben der Partikel verhindern.

Vorzugsweise können dabei die dem Fachmann bekannten Weichmacher eingesetzt werden, insbesondere Phthalatesterweichmacher, wie beispielsweise Dibutylphthalat, Bis(2-ethylhexyl)phthalat, Düsodecylphthalat, Dicyclohexylphthalat, Butylbenzylphthalat oder Ditridecylphthalat.

Dabei kann der Weichmacher mittels organischer Lösemittel, typischerweise 1,1,2-Trichloroethylen, Perchlorethylen, 1,2-Dichlorethan, 1,1,1-Trichlorethan, 1,1,2-Trichlorethan, Methylenchlorid, Chloroform, Isopropanol, Diethylether oder Aceton entfernt werden, um beispielsweise ein mikroporöses Material zu erhalten welches, beispielsweise durch kalandrieren, weiterverarbeitet werden kann.

Weiterhin können als Zusatzstoff (D)
- Silane, wie z.B.
   o Vinyltrialkoxysilane, z.B. Vinyltrimethoxsilan, Vinyltriethoxysilan, Vinyltriisopropoxysilan, Tris(2-methoxyethoxy)vinylsilan,
   o Alkyltrialkoxysilane, wie z.B. Octyltriethoxysilan,
- Methylsiliconate, wie z.B. Natriumemethylsiliconat, Kaliummethylsiliconat,
- Wasserdispergierbare Epoxysystem, wie z.B. die Waterpoxy Typen der BASF SE, z.B. Waterpoxy 1422, Waterpoxy 1455
- Wasserdispergierbares Polymeres Methylendiphenyldiisocyant, sog. eMDI
verwendet werden.

Besonders bevorzugt ist der Zusatzstoff (D) ein Silan und/oder Dimethylsiliconat.

Die erfindungsgemäßen porösen Aminoplast-Partikel enthalten bevorzugt 85 bis 100 Gew.-%, besonders bevorzugt 95 bis 100 Gew.-%, insbesondere 100 Gew.-% Aminoplaste und 0 bis 15 Gew.-%, besonders bevorzugt 0 bis 5 Gew.-%, insbesondere 0,1 bis 3 Gew.-% mindestens eines Zusatzstoffes. Vorzugsweise beträgt bei Mitverwendung mindestens eines Zusatzstoffes die Mindestmenge 0,01 Gew.-%.

In dem erfindungsgemäßen Verfahren erfolgt unter a) das Bereitstellen eines Lösungsmittels und gegebenenfalls Zugabe einer Säure (B). Unter Bereitstellen kann beispielsweise das Vorliegen des Lösungsmittels, insbesondere Wasser, in einem Reaktionsgefäß verstanden werden. Vorzugsweise wird in dem Schritt a) die Gesamtmenge des Lösungsmittels bereitgestellt. Vorzugsweise kann im Schritt a) 0,01 bis 30 Gew.-% der Gesamtmenge der Säure (B) zugegeben werden. Daher können beispielsweise 70 bis 99,99 Gew.-% der Säure (B) in Schritt c) zugegeben werden.

In dem Schritt b) des erfindungsgemäßen Verfahrens wird das Lösungsmittel auf eine Temperatur von 20°C bis 200°C erwärmt. Die Erwärmung des Lösungsmittels erfolgt nach dem für den Fachmann bekannten Verfahren. Besonders bevorzugt wird das Lösungsmittel auf eine Temperatur von 40°C bis 150°C erwärmt.

In dem Schritt c) erfolgt die Zugabe von einem Harz (A) und der Säure (B) in das erwärmte Lösungsmittel, unter Erhalt der Mischung (C) wobei zumindest ein Teil der Gesamtmenge von dem Harz (A) und der Säure (B) gleichzeitig zugegeben werden. Die Zugabe von dem Harz (A) und der Säure (B) kann beispielsweise mittels einer gradienten Fahrweise erfolgen. Unter einer gradienten Fahrweise wird die Zugabe der Komponenten mit nicht konstanter Geschwindigkeit verstanden. Es ist ebenfalls möglich aus Gründen der einfachen apparativen Handhabbarkeit die Komponenten Harz (A) und Säure (B) nicht kontinuierlich sondern stufenweise zuzugeben.

Unter gleichzeitig im Sinne der vorliegenden Erfindung wird aber verstanden, dass zumindest ein Teil des Harzes (A) und der Säure (B) zu demselben Zeitpunkt in das Lösungsmittel gegeben werden.

Vorzugsweise werden nicht gleiche Mengen Anteile von dem Harz (A) und der Säure (B) zugegeben.

Im dem Schritt d) wird die Mischung (C) mit Wärme für ein Zeitraum von mindestens 2 min behandelt. Besonders bevorzugt wird die Mischung (C) für einen Zeitraum von mindestens 2 min bis höchstens 600 min behandelt. Insbesondere wird die Mischung (C) mit Wärme für ein Zeitraum von mindestens 5 min bis 400 min behandelt. Vorzugsweise erwärmt man dabei die Mischung auf eine Temperatur von 80 °C bis 150 °C.

In dem Schritt g) erfolgt gegebenenfalls die Zugabe von mindestens einem Zusatzstoff (D). Die Zugabe des Zusatzstoffes (D) in dem Schritt g) kann auch gleichzeitig mit dem Schritt c) in dem erfindungsgemäßen Verfahren erfolgen.

In Schritt e) des erfindungsgemäßen Verfahrens kann ein Abkühlen der Mischung (C) erfolgen. Bevorzugt erfolgt nach dem Schritt d) in dem Schritt e) ein Abkühlen der Mischung (C) aus dem Schritt d).

Bevorzugt erfolgt nach dem Schritt d) eine Aufarbeitung der Mischung (C) aus Schritt e), insbesondere in Schritt f).

In dem Schritt f) des erfindungsgemäßen Verfahrens kann eine Aufarbeitung der Mischung (C) durch Abtrennen der entstandenen Partikel durch Filtration erfolgen. Dazu werden beispielsweise nach dem Abkühlen die entstandenen Partikel abfiltriert und mit Wasser und/oder einem Lösungsmittel gegebenenfalls nachgewaschen. Daran kann sich beispielsweise ein Aufschlämmen der erhaltenen Partikel anschließen. Danach kann ebenfalls wieder ein Filtrationsschritt erfolgen. Ein weiterer Schritt in der Aufarbeitung kann das Trocknen und Tempern des Filterkuchens umfassen. Dabei kann der Filterkuchen grob zerkleinert werden und in einem Trockenschrank getrocknet und anschließend beispielsweise bei 100°C bis 200°C getempert werden. Vorzugsweise kann der erhaltene Filterkuchen nach dem Trocknen gesiebt werden.

Eine weitere Möglichkeit der Aufarbeitung ist die Sprühtrockung. Dabei wird die Mischung (C), vor oder nach dem Abkühlen, sprühgetrocknet. Vorzugsweise kann auch noch Zusatzstoff (D) vor oder nach dem Versprühen dazugemischt werden.

Noch eine weitere Möglichkeit der Aufarbeitung ist die Zentrifugation. Dabei werden die Partikel aus der Mischung (C) vor oder nach dem Abkühlen in einem diskontinuierlichen oder semikontinuierlichen Prozess per beschleunigter Sedimentierung mittels einer Zentrifuge abgetrennt.

Bevorzugt braucht man die nach dem erfindungsgemäßen Verfahren erhaltenen Partikel nicht mahlen. Da die erhaltenen Partikel die gewünschte Partikelgröße aufweisen, kann durch das erfindungsgemäße Verfahren ein Mahlschritt und somit Energiekosten eingespart werden.

In Schritt g) des erfindungsgemäßen Verfahrens kann eine Zugabe von einem Zusatzstoff (D) erfolgen.

Besonders bevorzugt ist ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, umfassend die Schritte:
a) Bereitstellen eines Lösungsmittels und gegebenenfalls Zugabe einer Säure (B),
b) Erwärmen des Lösungsmittel auf eine Temperatur von 20°C bis 200°C,
c) Zugabe von einem Harz (A) und einer Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min, insbesondere um die Mischung auf eine Temperatur von 80°C bis 150°C zu erwärmen,
e) Abkühlen der Mischung (C) aus dem Schritt d), und
g) gegebenenfalls Zugabe von mindestens einem Zusatzstoff (D).

Ganz besonders bevorzugt ist ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, umfassend die Schritte:
a) Bereitstellen eines Lösungsmittels,
b) Erwärmen des Lösungsmittel auf eine Temperatur von 20°C bis 200°C,
c) Zugabe von einem Harz (A) und einer Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min, insbesondere um die Mischung auf eine Temperatur von 80°C bis 150°C zu erwärmen,
e) Abkühlen der Mischung (C) aus dem Schritt d),
f) Aufarbeitung der Mischung (C) aus Schritt e), und
g) gegebenenfalls Zugabe von mindestens einem Zusatzstoff (D).

Ganz besonders bevorzugt ist ein Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, umfassend die Schritte:
a) Bereitstellen eines Lösungsmittels und Zugabe einer Säure (B),
b) Erwärmen des Lösungsmittel auf eine Temperatur von 20 °C bis 200 °C,
c) Zugabe von einem Harz (A) und einer Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min, insbesondere um die Mischung auf eine Temperatur von 80°C bis 150°C zu erwärmen,
e) Abkühlen der Mischung (C) aus dem Schritt d),
f) Aufarbeitung der Mischung (C) aus Schritt e), und
g) gegebenenfalls Zugabe von mindestens einem Zusatzstoff (D).

Ganz besonders bevorzugt ist ein Verfahren zur Herstellung von Aminoplast-Partikeln mit einer spezifischen Oberfläche von 5 bis 250 m²/g und einem mittleren Partikeldurchmesser von 0,5 bis 50 µm, enthaltend mindestens 50 Gew.-% eines Aminoplasts, umfassend die Schritte:
a) Bereitstellen eines Lösungsmittels und Zugabe einer Säure (B),
b) Erwärmen des Lösungsmittel auf eine Temperatur von 20 °C bis 200 °C,
c) Zugabe von einem Harz (A) und einer Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min, insbesondere um die Mischung auf eine Temperatur von 80°C bis 150°C zu erwärmen,
e) Abkühlen der Mischung (C) aus dem Schritt d),
f) Aufarbeitung der Mischung (C) aus Schritt e), und
g) gegebenenfalls Zugabe von mindestens einem Zusatzstoff (D).

Vorzugweise werden die Schritte a) bis d) in der Reihenfolge a), b), c) und d) durchgeführt.

Vorzugsweise können die Schritte e), f) und g) in einer verschiedenen Reihenfolge durchgeführt werden. Beispielsweise kann das Verfahren in der Reihenfolge der Schritte a), b), c), d), e), f) und g) oder a), b), c), d), f), g) und e) oder a), b), c), d), g), f) und e) durchgeführt werden.

Ganz besonders bevorzugt erfolgt der Schritt g) vor Schritt e) und/oder f) und/oder der Schritt g) erfolgt nach Schritt e) und/oder f).

Bevorzugt ist ein Verfahren zur Herstellung von Aminoplast-Partikeln mit einer spezifischen Oberfläche von 10 bis 250 m²/g, insbesondere 20 bis 150 m²/g. Bevorzugt ist ein Verfahren zur Herstellung von Aminoplast-Partikeln mit einem mittleren Partikeldurchmesser von 1 µm bis 100 µm, insbesondere 0,5 µm bis 50 µm.

Bevorzugt wird zum Erhalt der Aminoplast-Partikel 0 bis 1 Gew.-%, bezogen auf die Gesamtmenge (C), Emulgator und/oder Schutzkolloid zugegeben. Ganz besonders bevorzugt wird zum Erhalt der Aminoplast-Partikel 0 bis 0,1 Gew.-%, bezogen auf die Gesamtmenge (C), Emulgator und/oder Schutzkolloid zugegeben. Insbesondere kann kein Emulgator und/oder Schutzkolloid zugegeben werden. Unter einem Emulgator oder Schutzkolloid können anionische, kationische oder amphotere Tenside verstanden werden.

Als anionische Tenside kommen Sulfate, Sulfonate, Carboxylate, Phosphate und Mischungen davon in Betracht.

Ebenfalls kann das Schutzkolloid ein Polysaccharid sein. Polysaccharide (auch als Mehrfachzucker, Vielfachzucker, Glycane/Glykane bezeichnet sind Kohlenhydrate, die aus einer großen Anzahl Monosacchariden (Einfachzucker) über eine glycosidische Bindung verbunden sind. Unter einem Polysaccharid kann man beispielsweise Stärke, modifizierte Stärke, Zellulose, mikrokristalline Cellulose, Agar, Carrageen, Guaran, Gummi Arabikum, Pektin, Xanthan oder Mischungen daraus verstanden werden.

Ein weiterer Gegenstand der Erfindung ist ein Aminoplast-Partikel mit einer spezifischen Oberfläche von 1 bis 500 m²/g und einen mittleren Partikeldurchmesser von 0,1 bis 100 µm, enthaltend mindestens 50 Gew.-% eines Aminoplasts, erhältlich durch die Schritte:
a) Bereitstellen eines Lösungsmittels und gegebenenfalls Zugabe einer Säure (B),
b) Erwärmen des Lösungsmittel auf eine Temperatur von 20 °C bis 200 °C,
c) Zugabe von einem Harz (A) und der Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min,
g) gegebenenfalls Zugabe von einem Zusatzstoff (D).

Vorzugsweise erfolgt nach dem Schritt d) in dem Schritt e) ein Abkühlen der Mischung (C) aus dem Schritt d).

Besonders bevorzugt werden, bezogen auf die Summe der Komponenten (A), (B) ,eines Lösungsmittels und gegebenenfalls eines Zusatzstoffes (D), die 100 Gew.-% ergibt, 1 bis 60 Gew.-% eines Harzes (A), 0,1 bis 10 Gew.-% einer Säure (B), 0 bis 30 Gew.-% eines Zusatzstoffes (D) und als Rest Lösungsmittel verwendet. Bei Vorliegen der Komponenten in Lösung werden die entsprechenden Gewichtsmengen berechnet.

Besonders bevorzugt ist der Aminoplast-Partikel porös.

Bevorzugt weisen die Partikel eine Porosität von 1 bis 99% auf. Die Porosität gibt das Verhältnis des Leerraums innerhalb einer Struktur und des verbleibenden Aminoplast-Materials an. Somit liegt vorzugsweise eine Porosität des porösen Partikels in einem Bereich von 1 bis 99%, bevorzugt in einem Bereich von 10 bis 99%, besonders bevorzugt in einem Bereich von 30 bis 95 %. Durch verschiedene Herstellungsverfahren können verschiedene Porenstrukturen erzeugt werden, wie beispielsweise Nano-, Meso- Oder Makroporen. Die Porengröße kann beispielsweise durch weitere Behandlungsschritte verändert werden, indem beispielsweise Laugen oder starke Säuren verwendet werden.

Die Porosität ist eine dimensionslose Messgröße und stellt das Verhältnis von Hohlraumvolumen zu Gesamtvolumen Aminoplast-Partikels dar. Sie dient als klassifizierendes Maß für die tatsächlich vorliegenden Hohlräume. Die Porosität ϕ ist definiert als ϕ = 1 - 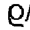 / 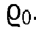 . Daher ist die Porosität ϕ definiert als 1 - dem Quotienten aus Rohdichte (des Aminoplast-Partikels) oder Schüttdichte und Reindichte.

Vorteilhafterweise liegt der durchschnittliche Porendurchmesser in einem Bereich von 1 nm bis 20 µm, bevorzugt in einem Bereich von 10 nm bis 10 µm, besonders bevorzugt in einem Bereich von 50 nm bis 1 µm.

Ein weiterer Gegenstand der Erfindung ist eine Kunststoffschicht, enthaltend die nach dem erfindungsgemäßen Verfahren erhaltenen Aminoplast-Partikel oder die erfindungsgemäßen Aminoplast-Partikel.

Bevorzugt ist ein Verfahren zur Herstellung der erfindungsgemäßen Kunststoffschicht, indem ein Kunststoff mit den erfindungsgemäßen Aminoplast-Partikeln und einem Verarbeitungsweichmacher vermischt wird und als Kunststoffschicht verarbeitet wird.

Ein weiterer Gegenstand der Erfindung ist die Verwendung von den mit dem erfindungsgemäßen Verfahren hergestellten Aminoplast-Partikeln oder der erfindungsgemäßen AminoplastPartikel, als Füllstoff, als Additiv, als Trockenmittel, als Rieselhelfer, als Wärmeisolator, als Trägermaterial für weitere Schichten oder chemische Substanzen.

Weiterhin eignen sich diese Aminoplast-Partikel als Füllstoffe in Gummianwendungen, wie beispielsweise in Reifen für PKWs, LKWs, Motorräder, Busse, Flugzeuge, Spezialfahrzeuge oder technischen Gummiprodukten, wie Dichtungen, Schläuche, NVH-Bauteile oder Wischblätter.

Des Weiteren eignen sich die erfindungsgemäßen Aminoplast-Partikel als Additiv für thermoplastische Kunststoffteile und -folien, z.B. als Füllstoff, Trennmittel, Strukturgeber oder Mattierungsmittel.

Aufgrund der großen spezifischen Oberfläche, der hohen Porosität und der hydrophilen Eigenschaften eignen sich die erfindungsgemäßen porösen Aminoplast-Partikel als Trockenmittel. Weiterhin eignen sich die erfindungsgemäßen Aminoplast-Partikel als Trägermaterial für Katalysatoren.

Die erfindungsgemäßen Aminoplast-Partikel sind schwerentzündlich und eignen sich als Pulver und/oder als Rieselhilfen für Feuerlöscher.

Aufgrund der hohen Porosität eignen sich die erfindungsgemäßen Aminoplast-Partikel für die Wärmeisolationsanwendungen in Dämmplatten im Baugewerbe, Kühlaggregaten, Fahrzeugen oder Industrieanlage, insbesondere in sogenannten Vakuum Isolationspaneelen.

Weiterhin eignen sich die erfindungsgemäßen Partikel für die Verwendung als Trägermaterial für biologisch aktive Substanzen, wie z. B. Pflanzenschutzmittel, insbesondere Pestizide, Insektizide, Herbizide oder Fungizide, sowie als Rieselhilfe für biologisch aktive Substanzen und/oder Düngemittel.

Ein weiterer Gegenstand der Erfindung ist die Verwendung der erfindungsgemäßen Kunststoffschicht, als Kunststofffilm, Kunststoffmembran oder Kunststofffolie.

Die Kunststoffmembran kann insbesondere eine Separatorenmembran sein. Diese Separatorenmembran eignet sich beispielsweise zur Verwendung in Blei/Schwefelsäurebatterien oder Lithiumbatterien.

Beispielsweise können die Aminoplast-Partikel in Separatorenmembranen von Primär- und Sekundärzellen als Füllstoff verwendet werden.

In einer weiteren Ausgestaltung kann man eine Separatorenmembran herstellen, indem man thermo-plastisches Polyolefin mit den beschriebenen porösen Aminoplast-Partikeln und einem der oben genannten Verarbeitungsweichmacher versetzt und nach dem Mischen eine Folie herstellt. Nach Entfernen des Verarbeitungsweichmachers mit einem zuvor genannten organischen Lösemittel und anschließendem Kalandrieren erhält man die Separatorenmembran.

Alle vorstehend aufgeführten Ausführungsformen und bevorzugten Ausführungsformen sind frei miteinander kombinierbar, sofern der Kontext nicht eindeutig dagegen spricht.

Vorzugsweise umfasst der Begriff umfassend den Begriff bestehend aus.

Die vorliegende Erfindung soll nun durch weitere Beispiele erläutert werden:

### Vergleichsbeispiel 1

Es werden 300 g Harz als Feststoff und 20,5 g Säure verwendet.

1250 g Wasser und 246 g KMT 793 (Kauramin-Lösung) werden in einem 4 l HWS Gefäß vorgelegt und auf 100°C aufgeheizt. Bei dieser Temperatur wird über 5 min 51 g Salpetersäure (21 % in Wasser) zugetropft und nach der Zugabe noch 2 h weitergerührt. Nach dem Abkühlen werden die entstandenen Partikel abfiltriert und mit Wasser nachgewaschen. Der Filterkuchen wird grob zerkleinert und im Trockenschrank bei 2 h bei 150°C getrocknet. Nach dem Sieben erhält man 35 g eines weißen Pulvers mit einer mittleren Partikelgröße von 11 µm. (Der Rest des Harzes verklebt den Rührer und das Reaktionsgefäß).

Die Partikelgröße beträgt 11 µm und die Ausbeute 23 %.

### Vergleichsbeispiel 2

Es werden 300 g Harz als Feststoff und 20,5 g Säure verwendet.

2508 g Wasser wird in einem 4 l HWS Gefäß vorgelegt und auf 100°C aufgeheizt. Bei dieser Temperatur wird 64 g Salpetersäure (32 % in Wasser) zugegeben, dann über 1 h 492 g KMT 793 (61 % in Wasser) und nach der Zugabe noch 2 h weitergerührt. Nach dem Abkühlen werden die entstandenen Partikel abfiltriert und mit Wasser nachgewaschen. Der Filterkuchen wird groß zerkleinert und im Trockenschrank bei 80°C vorgetrocknet und anschließend 2 h bei 150 - 180°C getempert.

Nach dem Sieben erhält man 250 g eines weißen Pulvers mit einer mittleren Partikelgröße von 216 µm.

Die Partikelgröße beträgt 216 µm, der Gehalt des freien Formaldehyds beträgt 0,04 %, die BET-Oberfläche beträgt 150 m²/g und die Ausbeute beträgt 83 %.

### Erfindungsgemäßes Beispiel 1

2474,5 g Wasser wird in einem 4 l HWS Gefäß vorgelegt und auf 100°C aufgeheizt. Bei dieser Temperatur wird über 1 h 492 g KMT 793 (61 % in Wasser) und 97,5 g Salpetersäure (21 % in Wasser) zugetropft und nach der Zugabe noch 2 h weitergerührt. Nach dem Abkühlen werden die entstandenen Partikel abfiltriert und mit Wasser nachgewaschen. Der Filterkuchen wird groß zerkleinert und im Trockenschrank bei 80°C vorgetrocknet und anschließend 2 h bei 150 - 180°C getempert.

Nach dem Sieben erhält man 210 g eines weißen Pulvers mit einer mittleren Partikelgröße von 6 µm.

Die Partikelgröße beträgt 4 µm und der Gehalt des freien Formaldehyds beträgt 0,03 %. Die BET-Oberfläche ist 61 m²/g und der pH-Wert während der Reaktion ist 3,5.

Die Ausbeute beträgt 70 %.

### Erfindungsgemäßes Beispiel 2

1063,5 g Wasser wird in einem 2 l HWS Gefäß vorgelegt und auf 100°C aufgeheizt. Bei dieser Temperatur wird 1,98 g Salpetersäure (21 % in Wasser) zugegeben, dann über 1 h 186,5 g KMT 793 (67 % in Wasser) und 45,7 g Salpetersäure (21 % in Wasser) zugetropft und nach der Zugabe noch 2 h weitergerührt. Nach dem Abkühlen werden die entstandenen Partikel abfiltriert und mit Wasser nachgewaschen. Der Filterkuchen wird groß zerkleinert und im Trockenschrank bei 80°C vorgetrocknet und anschließend 2 h bei 150 - 180°C getempert.

Nach dem Sieben erhält man 91 g eines weißen Pulvers mit einer mittleren Partikelgröße von 14 µm.

Die Partikelgröße beträgt 14 µm und der Gehalt des freien Formaldehyds beträgt 0,05 %. Die BET-Oberfläche ist 78 m²/g und der pH-Wert während der Reaktion ist 3.

Die Ausbeute beträgt 73 %.

## Patentansprüche

1. Verfahren zur Herstellung von Aminoplast-Partikeln mit einer spezifischen Oberfläche von 1 bis 500 m²/g und einem mittleren Partikeldurchmesser von 0,1 bis 100 µm, enthaltend mindestens 50 Gew.-% eines Aminoplasts, umfassend die Schritte:
a) Bereitstellen eines Lösungsmittels und gegebenenfalls Zugabe einer Säure (B),
b) Erwärmen des Lösungsmittel auf eine Temperatur von 20 °C bis 200 °C,
c) Zugabe von einem Harz (A) und der Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min,
g) gegebenenfalls Zugabe von mindestens einem Zusatzstoff (D).

2. Verfahren gemäß Anspruch 1, wobei nach dem Schritt d) in dem Schritt e) ein Abkühlen der Mischung (C) aus dem Schritt d) erfolgt.

3. Verfahren gemäß Anspruch 2, wobei nach dem Schritt d) eine Aufarbeitung der Mischung (C) aus Schritt e) erfolgt.

4. Verfahren gemäß einem der Ansprüche 1 bis 3, wobei 1 bis 60 Gew.-% eines Harzes (A), 0,1 bis 30 Gew.-% einer Säure (B), 0 bis 30 Gew.-% eines Zusatzstoffes und als Rest Lösungsmittel verwendet werden, wobei die die Summe der Komponenten (A), (B), eines Lösungsmittels und gegebenenfalls des mindestens einen Zusatzstoffes (D), 100 Gew.-% ergibt.

5. Verfahren gemäß einem der Ansprüche 1 bis 4, wobei das Harz ein Aminoplast-Vorkondensat ist.

6. Verfahren gemäß einem der Ansprüche 1 bis 5, wobei das Aminoplast der Aminoplast-Partikel ausgewählt ist aus der Gruppe bestehend aus Harnstoff-Formaldehydharzen (UF-Harze), Melamin-Formaldehydharzen (MF-Harze), melaminhaltigen, Harnstoff-Formaldehydharzen (MUF-Harze) oder Mischung daraus.

7. Verfahren gemäß einem der Ansprüche 1 bis 6, wobei das Harz (A) aufgebaut ist aus
i) 10 - 45 Gew.-% Formaldehyd,
ii) 40 - 90 Gew.-% Melamin,
iii) 0- 50 Gew.-% mindestens eines Additives,
wobei die Summe der Komponenten unter i) bis iii) insgesamt 100 Gew.-% ergibt.

8. Verfahren gemäß einem der Ansprüche 1 bis 7, wobei zum Erhalt der Aminoplast-Partikel 0 bis 1 Gew.-%, bezogen auf die Gesamtmenge (C), Emulgator und/oder Schutzkolloid zugegeben werden.

9. Verfahren gemäß einem der Ansprüche 1 bis 8, wobei die Aminoplast-Partikel 70 bis 100 Gew.-% Aminoplast und 0 - 30 Gew.-% mindestens eines Zusatzstoffes enthalten, wobei die Gesamtmenge aus Aminoplast und Zusatzstoff 100 Gew.-% ergibt.

10. Verfahren gemäß einem der Ansprüche 1 bis 9, wobei die Partikel eine Porosität von 1 bis 99% aufweisen.

11. Aminoplast-Partikel mit einer spezifischen Oberfläche von 1 bis 500 m²/g und einen mittleren Partikeldurchmesser von 0,1 bis 100 µm, enthaltend mindestens 50 Gew.-% eines Aminoplasts, erhältlich durch die Schritte:
a) Bereitstellen eines Lösungsmittels und gegebenenfalls Zugabe einer Säure (B),
b) Erwärmen des Lösungsmittel auf eine Temperatur von 20 °C bis 200 °C,
c) Zugabe von einem Harz (A) und der Säure (B) in das erwärmte Lösungsmittel, unter Erhalt der Mischung (C), wobei zumindest ein Teil der Gesamtmenge von dem Harz (A) und der Säure (B) gleichzeitig zugegeben werden,
d) Behandeln der Mischung (C) mit Wärme für einen Zeitraum von mindestens 2 min, und
g) gegebenenfalls Zugabe von mindestens einem Zusatzstoff (D).

12. Aminoplast-Partikel gemäß Anspruch 11, wobei nach dem Schritt d) in dem Schritt e) ein Abkühlen der Mischung (C) aus dem Schritt d) erfolgt.

13. Kunststoffschicht, enthaltend die nach dem Verfahren erhaltenen Aminoplast-Partikel gemäß einem der Ansprüche 1 bis 10 oder die Aminoplast-Partikel gemäß einem der Ansprüche 11 bis 12.

14. Verwendung von Aminoplast-Partikeln erhalten gemäß einem der Ansprüche 1 bis 10 oder Aminoplast-Partikel gemäß einem der Ansprüche 11 bis 12, als Füllstoff, als Additiv, als Trockenmittel, als Rieselhelfer, als Wärmeisolator, als Trägermaterial für weitere Schichten oder chemische Substanzen.

15. Verwendung der Kunststoffschicht gemäß Anspruch 14, als Kunststofffilm, Kunststoffmembran oder Kunststofffolie.
